# EUROPEAN PATENT SPECIFICATION

(11) **EP 1 235 447 B1**
(45) Date of publication and mention of the grant of the patent: **14.12.2005**
(21) Application number: 02251336.0
(22) Date of filing: 26.02.2002
(51) Int. Cl.: H04Q 7/34

(54) **Radio communication apparatus and qualification method of the same**
Funkkommunikationsgerät und Gütebestimmungsverfahren dafür
Appareil de communication radio et sa procédé de qualification

(30) Priority: 26.02.2001 JP 2001049869
(43) Date of publication of application: 28.08.2002
(73) Proprietor: KABUSHIKI KAISHA TOSHIBA, Tokyo 105-8001 (JP)
(72) Inventor: Wakutsu, Takashi, IPD Toshiba Corporation, Tokyo 105-8001 (JP); Mitsugi, Jun, IPD Toshiba Corporation, Tokyo 105-8001 (JP); Mukai, Manabu, IPD, K.K. Toshiba, Tokyo 105-8001 (JP); Takeda, Daisuke, IPD Kabushiki Kaisha Toshiba, Tokyo 105-8001 (JP); Inoue, Kaoru, IPD Kabushiki Kaisha Toshiba, Tokyo 105-8001 (JP); Tomizawa, Takeshi, IPD Kabushiki Kaisha Toshiba, Tokyo 105-8001 (JP); Kubo, Shun-ichi, IPD Toshiba Corporation, Tokyo 105-8001 (JP)
(74) Representative: Midgley, Jonathan Lee

(56) References cited:
- WO-A-00/30389
- WO-A-00/51380
- WO-A-00/74412
- WO-A-97/28662
- WO-A-97/42783
- WO-A-97/44975
- US-A- 5 528 748
- US-A- 6 138 010
- BERGMANN A ET AL: "PROTOCOL CONFORMANCE TESTING OF A GSM MOBILE STATION" MRC MOBILE RADIO CONFERENCE, XX, XX, November 1991 (1991-11), pages 17-24, XP000444227
- OSWALD J: "AN OVERVIEW OF TESTING GSM MOBILE STATIONS" PROCEEDINGS OF THE NORDIC SEMINAR ON DIGITAL MOBILE RADIO COMMUNICATIONS. HELSINKI, DEC. 1 - 3, 1992, HELSINKI, TELECOM FINLAND, FI, vol. SEMINAR 5, 1 December 1992 (1992-12-01), pages S3-201-S3-208, XP000458681
- HAGEDOORN R: "Type approval of GSM mobile stations" AREA COMMUNICATION. STOCKHOLM, JUNE 13 - 17, 1988, PROCEEDINGS OF THE EUROPEAN CONFERENCE ON ELECTROTECHNICS. (EUROCON), NEW YORK, IEEE, US, XP010077445

## Description

### BACKGROUND OF THE INVENTION

### FIELD OF THE INVENTION

The present invention relates to a qualification method (an authorization method) of a radio communication apparatus capable of changing radio functions.

### DESCRIPTION OF THE RELATED ART

Conventionally, radio communication apparatus (radio terminals) such as portable telephones and PHS (Personal Handyphone System) telephones are designed and manufactured based upon modulation systems and transfer rates. Further, the modulation systems and transfer rates arc exclusively used by these radio communication apparatus, and are defined in accordance with technical standards/specifications. In other words, a conventional radio terminal can only be used in a single radio communication system. Further, to use the conventional terminal, a qualification test is first performed. The qualification test is different than a performance test, which is performed for all radio terminal products when they are shipped from a factory of a manufacturer. On the contrary, the qualification test utilizes or determines whether or not the transmission technical specifications of the relevant radio terminal can be defined under the regulations of law.

In accordance with a conventional qualification method, a radio terminal is tested while it is being prepared. A qualification test radio communication system is also set up in which the tested radio terminal can transmit and receive. The qualification test performs various tests, such as frequency deviation, deviation of antenna power, and spurious radiation strengths. In this qualification test, a measurement is performed using both a measuring device and a corresponding method, which are determined for every feature tested. A result of the measurement is then compared with the technical standards of the radio communication system. For example, an allowable deviation in a frequency deviation test of a PHS radio communication system is within the exclusive range + 3 x 10⁻⁶ and - 3 x 10⁻⁶. Further, an upper limit of allowable antenna power deviation is 20% of the rated power, and a lower limit is 50% of the rated power.

When the measurement results of each feature tested (e.g., frequency deviation, antenna power deviation, etc.) satisfy the technical standards, the tested radio terminal is considered to have passed the qualification test. On the contrary, if the radio terminal does not satisfy the technical standards, the tested radio is considered to have failed the qualification test.

Clearly, to perform these qualification tests for each radio terminal manufactured is complicated and time consuming. Accordingly, the following rule has been introduced. Rather than testing each radio terminal in a large set of manufactured radio terminals, a qualification test is only performed on a group of radio terminals. When the group of radio terminals pass the qualification test, all radio terminals having the same machine type as the group of radio terminals is considered to have passed the qualification test. Thus, any person who purchases a radio terminal whose machine type is identical to the machine type of the tested group of radio terminals may use the radio communication system. Further, once the radio terminal is deemed to have passe the qualification test, the radio terminal does not have to be subsequently tested unless a specific problem occurs.

However, the following possibilities may occur in the near future. The hardware and software in a radio terminal are likely to be produced by a plurality of different vendors corresponding to respective radio communication systems and be combined in a single radio terminal. A radio terminal including software for performing radio functions is hereinafter referred to as a "software-defined radio (SDR) terminal."

The following problems occur when a qualification test is performed on a software-defined radio terminal. First, in a software-defined radio terminal, a modulating/demodulating process operation and a coding system are processed using software, and the software-defined radio machine can transmit and receive radio signals within several different radio communication systems. Thus, after a software-defined radio terminal passes a qualification for a first radio communication system, if the software of another radio communication system is installed (downloaded) onto the software-defined radio terminal, the software-defined radio terminal will likely not be able to communicate within the second radio communication system. For example, the software-defined radio terminal may generate electromagnetic waves having a higher electric power higher than required by law and/or may cause power leakage to adjacent channels.

Thus, to solve the above-described problems, every time new software is installed on a software-defined radio terminal, a new qualification test must be performed. In addition, when a new radio communication system is implemented, new qualification tests must also be time consuming. Further, because a software-defined radio machine terminal is flexible, the software-defined radio terminal may use various modes of arrangements requiring different qualification tests. Thus, the number of qualification tests is further increased.

We acknowledge the disclosure in Bergmann A et al: "Protocol Conformance Testing Of A GSM Mobile Station" MRC Mobile Radio Conference, November 1991 (1991-11), pages 17-24, XP000444227 of a radio communication testing method for GSM having the features of the pre-characterising portion of claim 1. In WO 97/42783, a mobile radio terminal compatible with GSM is authenticated and activated for use in a desired communication system through a message.

The present invention is a method and a system as defined respectively in claims 1 and 14.

Accordingly, the present invention can solve the above-noted and other problems.

Another advantage of the present invention is that it can provide a highly efficient qualification testing method of a software-defined radio machine that does not have to be performed for each software-defined radio terminal.

### DESCRIPTION OF DRAWINGS

A more complete appreciation of the invention and many of the attendant advantages thereof will be readily obtained as the same becomes better understood by reference to the following detailed description when considered in connection with the accompanying drawings, wherein:
Figs. 1(a) and 1(b) are diagrams for illustratively indicating a conceptional idea of a qualification testing method in accordance with an embodiment of the present invention;
Fig. 2 is a schematic block diagram representing an arrangement of a radio terminal shown in Figs. 1(a) and 1(b);
Fig. 3 is a schematic block diagram showing an arrangement of a resource controller indicated in Fig. 2;
Fig. 4 is a schematic block diagram indicating an arrangement of a measuring device shown in Fig. 1(a);
Fig. 5 is a schematic block diagram showing an arrangement of a radio unit indicated in Fig. 2;
Fig. 6 is a timing diagram representing an example of control signals supplied to a radio function variable element shown in Fig. 5;
Fig. 7 illustrates a relationship between a time response waveform and a spectrum of a modulation signal which is amplified by an amplifier corresponding to the radio function variable element;
Fig. 8 is a schematic block diagram indicating a modification of the amplifier shown in Fig. 5;
Fig. 9 is an explanatory diagram explaining an arrangement of the qualification testing method shown in Fig. 1(b); and
Fig. 10 illustrates a modification of the qualification testing method of Fig. 9.

### DESCRIPTION OF THE PREFERRED EMBODIMENTS

Referring now to the drawings, wherein like reference numerals designate identical or corresponding parts throughout the several views, the present invention will be described.

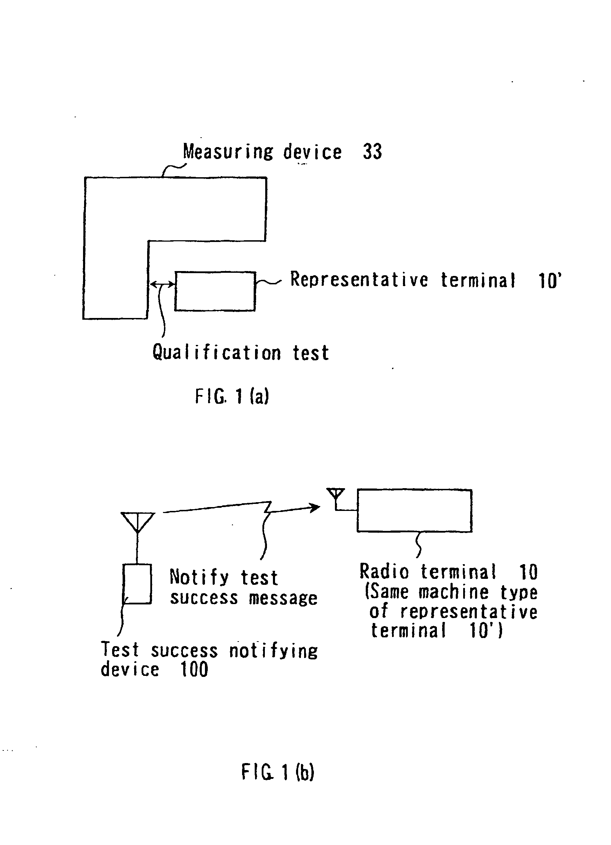

Fig. 1 illustratively indicates a conceptional idea of a qualification method in accordance with an embodiment of the present invention. First, it is assumed in Fig. 1(a), a measuring device 33 performs a qualification test for a desirable radio communication system with respect to a representative terminal 10'. The machine type of the representative terminal 10' is identical to a radio terminal 10 (see Fig. 1(b)) for which a qualification test is to be performed. That is, if the representative terminal 10' passes the qualification test, it is assumed the radio terminal 10 can also pass the qualification test.

Next, as indicated in Fig. 1(b), a test success notifying device (for example, base station) 100 used in the above-explained desirable radio communication system transmits (notifies) a test success message (notification) to the radio terminal 10. Further, because there is no clear radio communications regulation with respect to radio signal receptions, the radio terminal 10 can receive a radio signal any time.

In response to the received test success message, the radio terminal 10 may utilize the above-described desirable radio communication system. Note, the expression "utilization of a radio communication system" implies that in response to the notification issued from the test success notifying device, the radio terminal 10 may transmit to the desirable radio communication system. An example of a test success notification is when the radio terminal 10 receives a data flag "qualification OK (okay)" implying the radio terminal 10 is allowed to transmit to the desirable radio communication system.

The expression "same machine type" not only includes the same type of radio product, but also includes a situation when circuit arrangements of analog radio components used in the radio terminals are identical to each other. Also, the expression "test success notifying device" implies a service center and the like may notify a test success message to the radio terminal 10 in a wireless communication manner, or a wire communication manner.

The above-explained qualification method will now be explained in more detail.

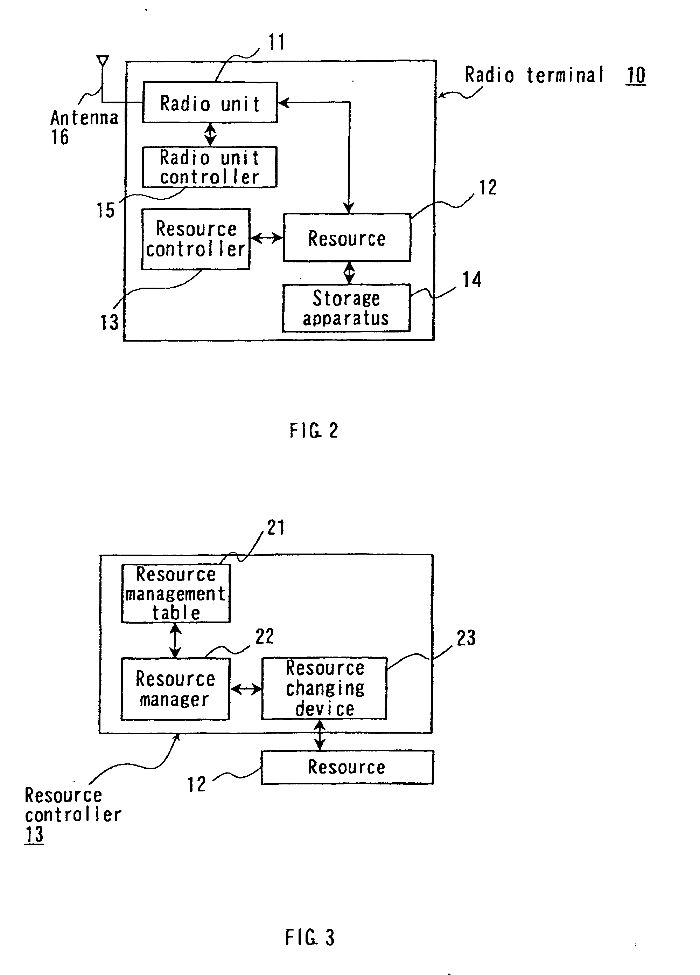

Fig. 2 is a schematic block diagram showing a major unit of the radio terminal 10,10' shown in Figs. 1(a) and 1(b). The radio terminal 10 is equipped with an antenna 16, a radio unit 11, a resource 12, a resource controller 13, a storage apparatus 14, and a radio unit controller 15. The radio unit 11 executes a wireless communication with respect to another radio terminal (not shown). The resource 12 includes a function for performing a modulating/demodulating process operation, and another function for executing a signal process operation with respect to data. Further, the resource controller 13 manages the resource 12, the storage apparatus 14 reads/writes data with respect to the resource 12, and the radio unit controller 15 controls the radio unit 11. In addition, Fig. 2 illustrates, for the sake of a simple explanation, only the major signal flows of analog and digital signals, and detailed control signal lines arc omitted.

Under control of the radio unit controller 15, the radio unit 11 converts a frequency of an electromagnetic wave received by the antenna 16 into a digital signal. The radio unit 11 then supplies the digital signal to the resource 12 provided with the signal processing function which is resettable. On the other hand, under control of the radio unit controller 15, the radio unit 11 receives transmission data which is produced by the resource 12, converts this transmission data into an analog signal, and converts the analog signal into a high frequency (radio frequency) signal so as to transmit the high frequency signal as an electromagnetic wave.

In addition, as discussed above, the resource 12 includes functions for executing the modulating/demodulating operation and the signal process operation with respect to the data. The resource 12 executes the demodulating process operation with respect to an analog signal supplied from the radio unit 11 so as to derive data from this analog signal based on the provided function. On the other hand, the resource 12 executes the demodulating process operation with respect to transmission data, and supplies the demodulated signal to the radio unit 11.

Further, at least one of the radio unit controller 15 and the resource 12 receives the success notification message indicating "qualification OK." The radio unit 11 can then transmit to a radio communication system by at least any one of the radio unit controller 15 and the resource 12. Additionally, the resource controller 13 changes a setting operation of the function of the resource 12 based upon information indicative of a structure of a resource (not shown).

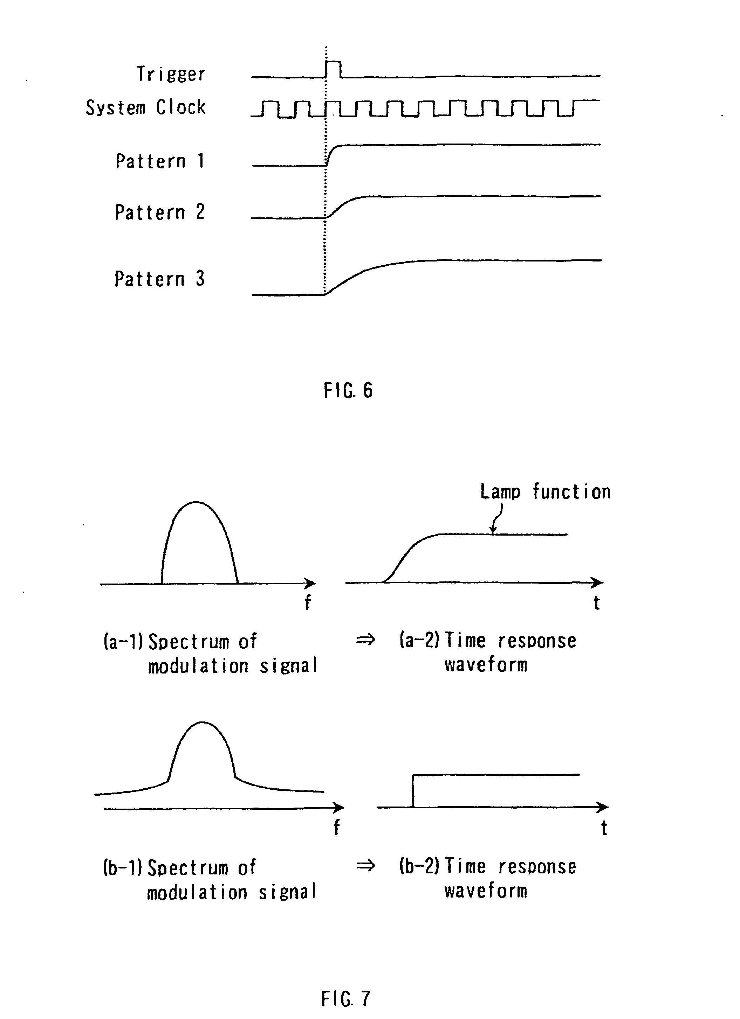

The storage apparatus 14 stores a software program capable of realizing the function provided on the resource 12 and data as to a circuit arrangement of a DSP (Digital Signal Processor) and an FPGA (Field Programmable Gate Array), which will be explained later. The storage apparatus 14 also stores control parameter data corresponding to a radio function variable element (discussed later with respect to Fig. 5), and data corresponding to either a received signal or a signal to be transmitted. The storage apparatus 14 includes a hard disk unit and/or a semiconductor memory, for example.

In addition, the function for performing the signal process operation with respect to the data is resettable. In other words, such a resource corresponds to an apparatus for executing a signal processing operation. In more detail, the resource may be a digital signal processor (DSP), a rewritable logic (FPGA, Field Programmable Gate Array), or the like. Because either a DSP or an FPGA is used, a desirable function block may be allocated in a flexible manner.

Turning now to Fig. 3 which is a schematic block diagram indicating an arrangement of the resource controller 13 shown in Fig. 2. As shown, the resource controller 13 includes a resource management table 21, a resource manager 22, and a resource changing device 23. The resource manager 22 updates contents of the resource management table 21 in response to use states of resources owned in the radio tenninal 10. As a result, the remaining resources may be allocated by using the resource management table 21. The resource manager 22 allocates the required amount of resources to realize a desirable function based upon information indicative of an arrangement used to realize a newly added function. Furthermore, the resource manager 22 executes an allocation of these resources using the information as to the remaining resource. A function of a resource is also changed by the resource changing device 23.

With the above-explained structure, such a radio terminal (software-defined radio terminal) capable of changing the radio function based upon the information (resource 12) indicative of the structure of the radio function can be realized.

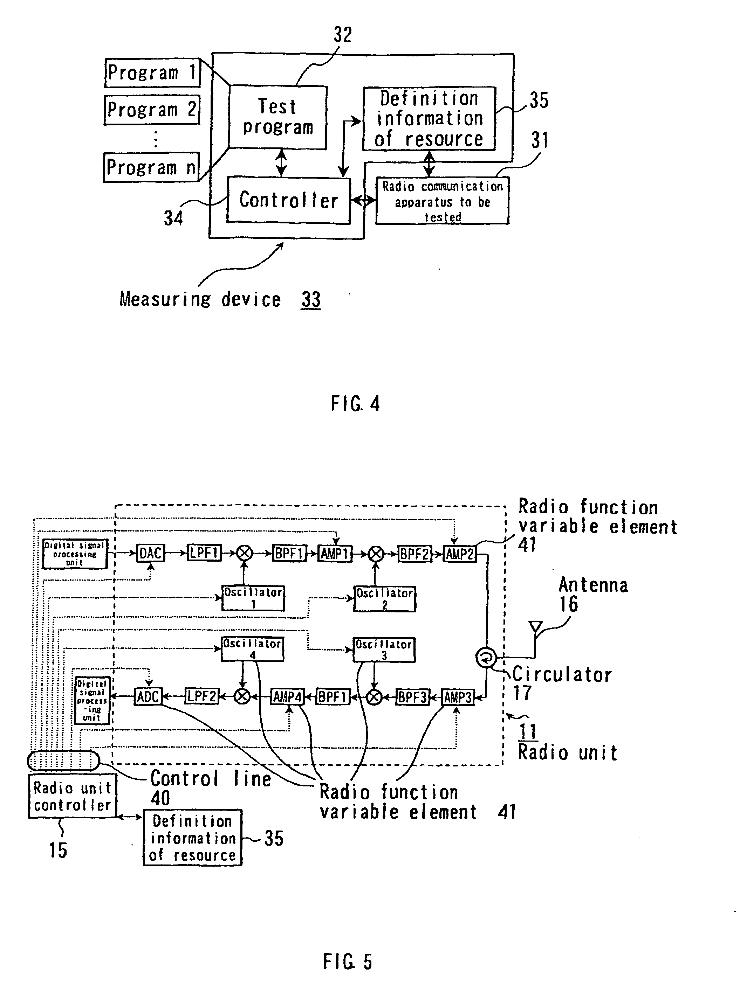

Next, Fig. 4 is a schematic block diagram of the measuring device 33 shown in Fig. 1. A radio communication apparatus 31 to be tested corresponds to the representative terminal 10' of Fig. 1. A test program 32 corresponds to a program installed in a memory of the measuring device 33 and is used to test the radio communication apparatus 31. The test program 32 includes software for testing the modulating/demodulating and detecting process operations for every predetermined radio communication system. Further, the test program 32 is processed in the form of a library.

In addition, as discussed above, the radio communication system provided in the software-defined radio terminal maybe changed. Therefore, the test program is prepared for every radio communication system to be tested by a qualification test. A test feature is also determined for every predetermined radio communication system. For example, the following qualification test features may be provided for a PHS system: frequency deviation; deviation in antenna power, strengths of spurious radiation; occupied bandwidths; adjacent channel leakage power; leakage power under carrier-OFF condition; transmission speeds of modulation signals; strengths of electromagnetic waves which are secondarily generated and so on.

The measuring device 33 configured to perform the qualification test includes the test program 32, a controller 34, and a definition information resource 35 corresponding to resources used in the tested radio communication apparatus 31.

A test operation of the radio communication apparatus 31 is performed as follows:

After the radio communication apparatus 31 is connected with the measuring device 33 (namely, the radio communication apparatus 31 is connected to both the controller 34 and definition information resource 35 via wire or wireless communication manner), the structure of the resource of the radio communication apparatus 31 is changed based upon the definition information resource 35 indicative of the resources used in the radio communication apparatus 31, and the test program 32 is executed.

In a software-defined radio terminal, there is a free degree in an arrangement of a radio communication apparatus, Because a characteristic of a radio terminal may depend upon an arrangement of the internal radio functions, measuring operations should be performed plural times corresponding to the different radio functions. Therefore, the controller 34 performs the test operation while sequentially changing both the definition information resource 35 indicative of the structure of the resource and the test program 32. If all tested features satisfy the technical standards, then the radio communication apparatus 31 is considered to have passed the qualification test. On the contrary, if all of tested features are not satisfied, the apparatus 31 is considered to have failed the test.

As discussed above, there are several types of radio functions provided in a software-defined radio terminal. In other words, software modules corresponding to a plurality of different radio communication systems arc loaded onto the software-defined radio terminal. Accordingly, a qualification test should be performed for all combinations in which plural radio communication systems maybe commonly present.

For example, consider a situation in which a system A and a system B are commonly present. In this situation, there are the following four combinations:
(1) when only system A is loaded on the software-defined radio terminal;
(2) when system A has been loaded on the software-defined radio terminal before the system B;
(3) when system B has been loaded on the software-defined radio terminal before system A; and
(4) when only system B is loaded on the software-defined radio terminal.

As one example, a description will now be given of a qualification test to determine whether or not the radio communication apparatus 31 can be used in a certain radio communication system (assumed as "system A").

First, the controller 34 deletes a software program used for system A, which is stored in the radio communication apparatus 31 (i.e., an initializing operation is performed so the apparatus 31 doesn't have any software programs installed). Next, the controller 34 selects the appropriate resource definition information so only system A will be loaded on the radio communication apparatus 31 from the resource definition information 35. The controller 34 then transmits (downloads) the selected resource definition information to the radio communication apparatus 31. Thereafter, a test program used for system A is executed, thereby completing a qualification test when only system A is to be tested.

To execute the qualification tests for all combinations in which plural radio communication systems may be commonly present, the controller 34 subsequently deletes the software program used for system A from the radio communication apparatus 31, and initializes the radio communication apparatus 31.

The controller 34 then selects the appropriate resource definition information for system B, and transmits the selected resource definition information to the radio communication apparatus 31. Thereafter, a test program used for the system B is executed, so as to perform a qualification test for system B. The other combinations may be similarly tested.

In addition, because the test program 32 used to test a plurality of test features and the resource definition information 35 indicative of the arrangement of the resource of the radio communication apparatus are defined as a library, the qualification test of the software-defined radio terminal can be easily realized.

Further, mass-produced radio terminals with the same machine type include equivalent functions. Thus, qualification tests may be performed only on a smaller group of the mass-produced radio terminals so as to reduce the complexity and time required to complete the testing process for all of the mass-produced radio terminals.

Turning now to Fig. 5, which is a block diagram of the radio unit 11 shown in Fig. 2. A digital signal transferred from a digital signal processing unit employed in the resource 12 of Fig. 2 is converted into an analog signal by a digital-to-analog converter (DAC), and the analog signal output from the DAC is passed through a low-pass filter (LPF1). A signal output from the LPF1 is then mixed with a signal output from an oscillator 1 by a mixer so as to be frequency-converted. A signal output from the mixer is supplied to a band-pass filter (BPF1), and a signal output from the BPF1 is amplified by an amplifier (AMP1).

Thereafter, a signal output from the AMP1 is mixed with a signal output from another oscillator 2 by another mixer so as to be frequency-converted. The frequency-converted signal is then supplied to another band-pass filter (BPF2), and the filtered signal is amplified by another amplifier (AMP2). A signal output from the AMP2 is radiated from the antenna 16 through a circulator 17.

Conversely, a signal received by the antenna 16 is supplied via the circulator 17 to another amplifier (AMP3). A signal flow operation executed when a signal is received is performed in accordance with a sequential operation indicated by the arrows in the lower half of Fig. 5. Further, Fig. 5 merely indicates one example of a signal flow operation, but does not limit the radio unit 11. Also, Fig. 5 merely represents as one example, a total number of the amplifiers, oscillators, and filters. However, any other number of components (amplifiers, oscillators, filters, etc.) may be used.

As shown, a radio function variable element 41 includes the DAC, oscillator, AMP, and ADC, which is variable in response to a control parameter Further, a control line 40 (indicated by a dotted line) connects the radio function variable clement 41 with the radio unit controller 15. The radio unit controller 15 changes the control parameter of the radio function variable element 41 using the control line 40 so as to control the radio unit 11 in such a manner that the radio terminal may be adapted to a desirable radio communication system.

This control operation implies that, for example, a bit extracting position of the DAC is controlled, an oscillation frequency of an oscillator is controlled, an amplification of an AMP is controlled and so on. Then, when the qualification test is performed, the measuring device 33 of Fig. 4 executes the qualification test while the measuring device 33 controls the radio unit controller 15 via the definition information resource 35.

In addition, a software-defined radio terminal is properly operable with respect to a plurality of radio communication systems. In other words, the radio unit 11 is required to operate with respect to all radio communication systems. In this instance, it is not possible to avoid a condition in which the technical specification of the radio unit 11 more or less exceeds the standard technical specifications. However, because the radio unit 11 is arranged so it may be controlled by the above-explained radio unit controller 15, the radio function of the radio unit 11 may be appropriately changed via the radio unit controller 15.

Next, Fig. 6 is a timing diagram representing an example of a control signal which is transferred to the radio function variable element 41 via the control line 40 by the radio unit controller 15. A gate circuit converts a clock signal produced by frequency-dividing a system clock into the control signal. Fig. 6 illustrates, as an example, control signals having different rise times (i.e., patterns 1, 2, and 3). The control signal is supplied to, for example, an amplifier of a radio unit so as to be used for a control operation of transmitting a desirable signal. In addition, a characteristic of an analog radio unit may greatly depend upon a control method of the analog radio unit. In other words, the characteristic of the analog radio unit may be changed based on how the analog radio unit is controlled.

Referring now to Fig. 7, a description will be given of an example on how the characteristic of the analog radio unit is changed based on a difference in control methods. Fig. 7 represents both spectra and time response waveforms of modulation signals amplified by an amplifier in the radio function variable element 41. In Fig. 7, symbols (a-1) and (b-1) indicate the spectra of the modulation signals, whereas symbols (a-2) and (b-2) represent the time response waveforms.

The spectrum (b-1) corresponds to a time response waveform that is changed in a step form, and the spectrum (a-1) corresponds to a time response waveform that is gently changed, similar to a ramp function. In other words, the adjacent channel leakage power is changed, depending upon the control method used by the analog radio unit.

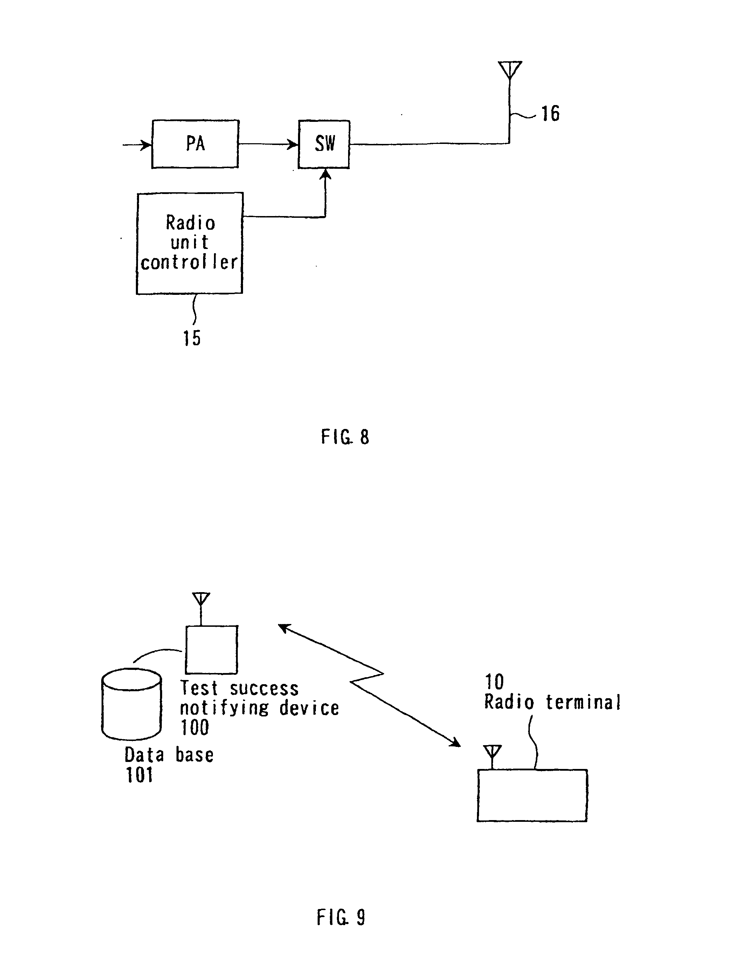

Turning now to Fig. 8, which schematically indicates another example of how the characteristic of the analog radio unit may be changed, based on a change in the control method (i.e., by modification ofAMP2 shown in Fig. 5). In Fig. 8, an output of a power amplifier PA 52 (corresponding to the AMP2 of Fig. 5) is connected to the antenna 16 via an analog switch SW 50. ON/OFF operations of the analog switch SW 50 is controlled by the radio unit controller 15. In addition, when a suppression characteristic for leakage power is sufficiently achieved, the OFF operation of only one analog switch SW may be used.

Further, when two sets of analog switches are cascade-connected to handle an expected insufficient suppression characteristic for the leakage power, the two analog switches may be turned OFF at the same time. In addition, if two sets of analog switches are used, the circuitry scale size is inevitably increased. However, because the radio unit of the software-defined radio terminal has to operate for all radio communication systems, the technical specification of the radio unit must exceed more or less the standard technical specification. Considering this technical over-specification aspect, because a circuit scale is slightly increased by providing a plurality of analog switches, two or more analog switches may be used.

As previously described, the characteristic of the analog radio unit depend on the control method of the analog radio unit. In other words, there is a correlative relationship between the control method and the characteristic of the analog radio unit. Thus, when the control method of the radio unit is specified, the characteristic of the radio unit can also be specified.

As previously explained with reference to Fig. 4, in accordance with one embodiment of the present invention, the qualification test of the radio communication apparatus can be readily achieved, and the radio functions of the radio communication apparatus can be easily changed based on information indicative of the structures of the radio functions. In addition to the arrangement shown in Fig. 4, if the controller 34 of the measuring device 33 transmits a message to a radio unit controller of a radio communication apparatus to be tested, then the appropriate qualification test may be easily performed even when a control method of a radio unit is changed (for example, a radio communication system is changed from system A to system B).

Referring now to Fig. 9, which is an explanatory diagram for explaining an operation executed after the representative terminal passes the qualification test in Fig. 1(a), (i.e., a test success message is notified from a test success notifying device 100 to a radio terminal 10 as shown in Fig. 1(b)). The representative terminal (namely, radio terminal 1 (0' of Fig. 1) whose machine type is identical to that of the radio terminal 10 has passed a qualification test and the representative terminal is provided with a terminal function of a radio communication system operated by the test success notifying device 100 of Fig. 9.

As shown, the test success notifying device 100 includes a database 101. Further, a control sequence of a radio unit with respect to each radio terminal used in the radio communication system is described in the database 101. The management of the database 101 is performed by a base station controller (not shown) installed in a test success notifying device 100 (for example, a base station).

In addition, a radio function of the radio terminal 10 may be changed by changing a resource (namely, the resource 12 of Fig. 2). The radio terminal 10 acquires such information in a download operation, or the like so as to change the resource. Further, the acquired information indicates the terminal function of the radio communication system which is operated by the test success notifying device 100 of Fig. 9. When a desirable function is provided in the resource of the radio terminal 10, it can be understood the radio terminal 10 owns the terminal function of the radio communication system operated by the test success notifying device 100 of Fig. 9.

In order for the radio terminal 10 to radiate electromagnetic waves, the radio terminal 10 must pass a qualification test. As previously explained, the representative terminal (namely, radio terminal 10' of Fig, 1) whose machine type is identical to that of the radio terminal 10 has passed the qualification test so the representative terminal 10' is provided with the terminal functions of the radio communication system operated by the test success notifying device 100 of Fig. 9.

Therefore, while the qualification method in accordance with one embodiment of the present invention is used, if the radio terminal 10 shown in Fig. 9 executes a control sequence capable of passing a qualification test, then the radio terminal 10 passed the qualification test.

In order for the radio terminal 10 to execute the control sequence capable of passing the qualification test, the radio terminal 10 must acquire the information representative of this control sequence. When the radio terminal 10 has not yet acquired the control sequence capable of passing the qualification test, the radio terminal 10 cannot radiate electromagnetic waves (i.e., because it has not passed a qualification test).

In other words, the radio terminal 10 cannot request the base station to provide the information indicative of the control sequence. However, regulation corresponding to radio signal receptions do not prevent the radio terminals 10 from receiving radio signals. Therefore, if the base station notifies in a periodic manner the control sequence of the analog radio unit whose machine type is identical to that of the representative terminal (namely, radio terminal 10' of Fig. 1), then the radio terminal 10 may acquire the information indicative of this control sequence.

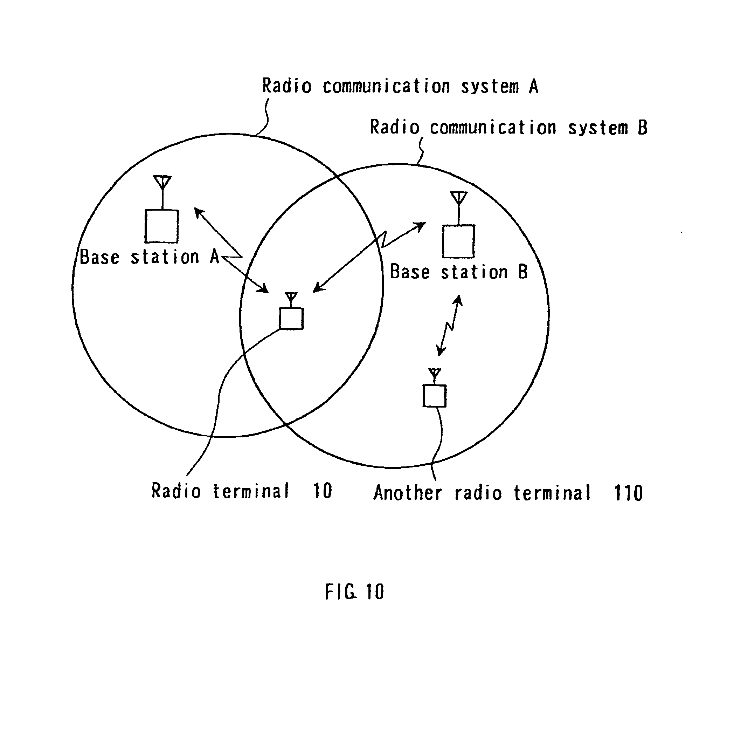

Turning next to Fig. 10, which is a diagram for illustratively showing a modification of the test success notification operation shown in Fig. 9. As shown, the radio terminal 10 communicates with different base stations (e.g., both base stations A and B) which are operated by a plurality of different radio communication systems (both radio communication system A and radio communication system). The radio terminal 10 may access both of the radio communication systems A and B in, for example, a time divisional manner and the like. In other words, the necessary function for connecting with the different radio communication systems has been set to the resource 12 of the radio terminal 10.

When the radio terminal 10 accesses both of the radio communication systems A and B by commonly using the analog radio unit, the required control timing is very strict, as compared to a radio terminal 110 connected to only one radio communication system.

In accordance with another embodiment of the present invention, the radio terminal 10 acquires the information indicative of a control sequence of an analog radio unit employed in the radio terminal 10 from the base stations, and controls the analog radio unit in accordance with this acquired information, so the radio terminal 10 may radiate electromagnetic waves.

However, there is no limitation as to the number of control sequences. That is, only one control sequence of an analog radio unit used in a radio terminal is not provided in order to pass a qualification test. Therefore, if a plurality of control sequences are previously tested for the representative terminal (namely, the radio terminal 10' of Fig. 1) and the plurality of control sequences capable of passing a qualification test can be determined, then a radio terminal may select a suitable control sequence. In other words, for a radio terminal whose control timing is very strict, this radio terminal may select its own suitable control sequence suitable from the plurality of control sequences capable of passing a qualification test.

Further, for the radio terminal 10 to select its own suitable control sequence, the base station may notify the plurality of control sequences in a periodic manner.

As discussed above, in accordance with one embodiment of the present invention, when the radio terminal accesses a plurality of radio communication systems, the strict control timing of the analog radio unit can be mitigated.

Also, in accordance with one embodiment of the present invention, while the qualification test is performed using the representative radio terminal, the test result for indicating as to whether or not this representative radio terminal can pass this qualification test is applied via the test success notifying device to another radio terminal whose machine type is the same as the machine type of the representative radio terminal. Therefore, such a qualification test does not have to be performed for each radio terminal, so the total number of qualification tests is reduced. This is especially effective when a newly-introduced radio communication system is brought into service.

This invention may be conveniently implemented using a conventional general purpose digital computer or microprocessor programmed according to the teachings of the present specification, as will be apparent to those skilled in the computer art Appropriate software coding can readily be prepared by skilled programmers based on the teachings of the present disclosure, as will be apparent to those skilled in the software art. The invention may also be implemented by the preparation of application specific integrated circuits or by interconnecting an appropriate network of conventional component circuits, as will be readily apparent to those skilled in the art.

The present invention includes a computer program product which is a storage medium including instructions which can be used to program a computer to perform a process of the invention. The storage medium can include, but is not limited to, an type of disk including floppy disks, optical disks, CD-ROMs, and magneto-optical disks, ROMs, RAMs, EPROMs, EEPROMs, magnetic or optical cards, or any type of pure software inventions (e.g., word processing, accounting, Internet related, etc.) media suitable for storing electronic instructions

Obviously, numerous modifications and variations of the present invention are possible in light of the above teachings. It is therefore to be understood that within the scope of the appended claims, the invention may be practiced otherwise than as specifically described herein.

## Claims

1. A qualification method for testing a radio communication system including a plurality of radio terminals (10), comprising:
providing a representative terminal (10) having the same hardware configuration as the plurality of radio terminals;
executing a qualification test on the representative terminal so as to determine whether or not the representative terminal can be used in a desired radio communication system or systems from a plurality of radio communication systems; and
receiving a test success result indicating that the representative terminal passed the qualification test;
**characterised in that** the plurality of radio terminals and the representative terminal are software-defined radio terminals, and by the step of receiving the test success result as a message and notifying the test success message to the plurality of radio terminals so as to qualify them for transmission onto the desired system or systems.

2. A method according to claim 1, wherein
the executing step determines a control sequence for controlling a radio unit of the representative terminal, by which the representative terminal can pass the qualification test,
the receiving step receives the control sequence, and the notifying step notifies the received control sequence to the plurality of radio terminals.

3. A method according to claim 1 or 2, wherein the notifying step notifies the plurality of radio terminals via a base station used for the desired radio communication system.

4. A method according to claim 1 or 2, wherein the notifying step notifies the plurality of radio terminals via a service center used for the desired radio communication system.

5. A method according to claim 4, wherein the service center notifies the test success message to the plurality of radio terminals by wireless communication.

6. A method according to claim 4, wherein the service center notifies the test success message to the plurality of radio terminals by wire communication.

7. A method according to any one of the preceding claims, wherein the executing step performs a qualification test for all combinations of the plurality of radio communication systems.

8. A method according to any preceding claim, in which software modules corresponding to a plurality of the radio communication systems are loaded onto the software-defined radio terminals, which are then capable of receiving the test success message notification for qualifying them to transmit on those systems.

9. A method according to any of claims 1 to 5, in which each radio terminal is arranged to receive signals on the desired radio communication system even before it has been qualified for transmission on the system.

10. A method according to claim 8, comprising reconfiguring one of the radio terminals by using control parameter data to change a radio function variable element.

11. A method according to any preceding claim, each of the plurality of software-defined radio terminals comprising:
a radio unit (11) configured to convert an analog radio signal into a digital signal;
a radio unit controller (15) configured to control the radio unit;
a resource (12) configured to communicate the digital signal with the radio unit, to perform a signal processing operation on the digital signal, and to reset a function of the signal processing operation; and
a resource controller (13) configured to manage the resource,
wherein the software-defined radio terminal transmits signals within a desired radio communication system out of a plurality of radio communication systems, when the software-defined radio terminal receives an externally transmitted message indicating that the radio terminal may transmit signals with respect to the desired radio communication system.

12. A method according to claim 11, wherein the resource controller comprises:
a resource management table (21) indicating a surplus of the resource;
a resource manager (22) configured to allocate the surplus of the resource; and
a resource changing device (23) configured to change a function of the resource.

13. A method according to claim 11 or 12, the software-defined radio terminal further comprising:
an antenna (16) configured to transmit and receive radio signals; and
an analog switch (SW) disposed between the antenna and a power amplifier (PA) of the radio unit,
wherein the radio unit controller controls ON/OFF operations of the analog switch.

14. A qualification system for testing a radio communication system including a plurality of radio terminals (10), and a representative terminal (10) having the same hardware configuration as the plurality of radio terminals, the system comprising:
means (33) for executing a qualification test on the representative terminal so as to determine whether or not the representative terminal can be used in a desired radio communication system or systems from a plurality of radio communication systems; and
means for receiving a test success result indicating that the representative terminal passed the qualification test;
**characterised in that** the plurality of radio terminals and the representative terminal are software-defined radio terminals, and by
the receiving means being for receiving the test success result as a test success message, the system further comprising means (100) for notifying the test success message to the plurality of radio terminals so as to qualify them for transmission onto the desired system or systems.

15. A system according to claim 14, wherein
the executing means determines a control sequence for controlling a radio unit of the representative terminal, by which the representative terminal can pass the qualification test,
the receiving means receives the control sequence, and the notifying means notifies the received control sequence to the plurality of radio terminals.

16. A system according to claim 14 or 15, wherein the notifying means notifies the plurality of radio terminals via a base station used for the desired radio communication system.

17. A system according to claim 14 or 15, wherein the notifying means notifies the plurality of radio terminals via a service center used for the desired radio communication system.

18. A system according to claim 17, wherein the service center notifies the test success message to the plurality of radio terminals by wireless communication.

19. A system according to claim 17, wherein the service center notifies the test success message to the plurality of radio terminals by wire communication.

20. A system according to any one of claims 14 to 19, wherein the executing means performs a qualification test for all combinations of the plurality of radio communication systems.

21. A system according to any one of claims 14 to 20, in which software modules corresponding to a plurality of the radio communication systems are loaded onto the software-defined radio terminals, which are then capable of receiving the test success message notification for qualifying them to transmit on those systems.

22. A system according to any of claims 14 to 18, in which each radio terminal is arranged to receive signals on the desired radio communication system even before it has been qualified for transmission on the system.

23. A system according to any one of claims 14 to 22, wherein each of the plurality of software-defined radio terminals comprises:
a radio unit (11) configured to convert an analog radio signal into a digital signal;
a radio unit controller (15) configured to control the radio unit;
a resource (12) configured to communicate the digital signal with the radio unit, to perform a signal processing operation on the digital signal, and to reset a function of the signal processing operation; and
a resource controller (13) configured to manage the resource, wherein in use the software-defined radio terminal transmits signals within a desired radio communication system out of a plurality of radio communication systems, when the software-defined radio terminal receives an externally transmitted message indicating that the radio communication apparatus may transmit signals with respect to the desired radio communication system.

24. A system according to claim 23, wherein the resource controller comprises:
a resource management table (21) indicating a surplus of the resource;
a resource manager (22) configured to allocate the surplus of the resource; and
a resource changing device (23) configured to change a function of the resource.

25. A system according to claim 23 or 24,
the software-defined radio terminal further comprising:
an antenna (16) configured to transmit and receive radio signals; and
an analog switch (SW) disposed between the antenna and a power amplifier (PA) of the radio unit,
wherein the radio unit controller controls ON/OFF operations of the analog switch.

## Patentansprüche

1. Qualifikationsverfahren zum Testen eines Funkkommunikationssystems, inkludierend eine Vielzahl von Funkendgeräten (10), umfassend:
Vorsehen eines repräsentativen Endgerätes (10) mit der gleichen Hardwarekonfiguration wie die Vielzahl von Funkendgeräten;
Ausführen eines Qualifikationstests in dem repräsentativen Endgerät so um zu bestimmen, ob das repräsentative Endgerät in einem gewünschten Funkkommunikationssystem oder Systemen aus einer Vielzahl von Funkkommunikationssystemen verwendet werden kann oder nicht; und
Empfangen eines Testerfolgsergebnisses, das anzeigt, dass das repräsentative Endgerät den Qualifikationstest bestanden hat;
**gekennzeichnet dadurch, dass** die Vielzahl von Funkendgeräten und das repräsentative Endgerät software-definierte Funkendgeräte sind, und durch den Schritt zum Empfangen des Testerfolgsergebnisses als eine Nachricht und Bekanntgeben der Testerfolgsnachricht zu der Vielzahl von Funkendgeräten so, um sie für eine Übertragung auf das gewünschte System oder Systeme zu qualifizieren.

2. Verfahren nach Anspruch 1, wobei
der Ausführungsschritt eine Steuersequenz zum Steuern einer Funkeinheit des repräsentativen Endgerätes bestimmt, wodurch das repräsentative Endgerät den Qualifikationstest bestehen kann,
der Empfangsschritt die Steuersequenz empfängt, und der Bekanntgabeschritt die empfangene Steuersequenz der Vielzahl von Funkendgeräten bekannt gibt.

3. Verfahren nach Anspruch 1 oder 2, wobei der Bekanntgabeschritt die Vielzahl von Funkendgeräten über eine Basisstation, die für das gewünschte Funkkommunikationssystem verwendet wird, bekannt gibt.

4. Verfahren nach Anspruch 1 oder 2, wobei der Bekanntgabeschritt die Vielzahl von Funkendgeräten über ein Dienstzentrum, das für das gewünschte Funkkommunikationssystem verwendet wird, bekannt gibt.

5. Verfahren nach Anspruch 4, wobei das Dienstzentrum die Testerfolgsnachricht der Vielzahl von Funkendgeräten durch drahtlose Kommunikation bekannt gibt.

6. Verfahren nach Anspruch 4, wobei das Dienstzentrum die Testerfolgsnachricht der Vielzahl von Funkendgeräten durch drahtgebundene Kommunikation bekannt gibt.

7. Verfahren nach einem beliebigen der vorangehenden Ansprüche, wobei der Ausführungsschritt einen Qualifikationstest für alle Kombinationen der Vielzahl von Funkkommunikationssystemen durchführt.

8. Verfahren nach einem beliebigen vorangehenden Anspruch, in dem Softwaremodule entsprechend einer Vielzahl der Funkkommunikationssysteme in die software-definierten Funkendgeräte geladen werden, die dann zum Empfangen der Testerfolgsnachrichtenbekanntgabe zum Qualifizieren von ihnen fähig sind, um in jenen Systemen zu übertragen.

9. Verfahren nach beliebigen von Ansprüchen 1 bis 5, in dem jedes Funkendgerät angeordnet ist, Signale in dem gewünschten Funkkommunikationssystem zu empfangen, sogar bevor es für eine Übertragung in dem System qualifiziert wurde.

10. Verfahren nach Anspruch 8, umfassend Neukonfiguration von einem der Funkendgeräte durch Verwenden von Steuerparameterdaten, um ein Funkfunktionsvariablenelement zu ändern.

11. Verfahren nach einem beliebigen vorangehenden Anspruch, jedes aus der Vielzahl von software-definierten Funkendgeräten umfassend:
eine Funkeinheit (11), die konfiguriert ist, ein analoges Funksignal in ein digitales Signal zu konvertieren;
eine Funkeinheitensteuervorrichtung (15), die konfiguriert ist, die Funkeinheit zu steuern;
eine Ressource (12), die konfiguriert ist, das digitale Signal mit der Funkeinheit zu kommunizieren, um eine Signalverarbeitungsoperation in dem digitalen Signal durchzuführen, und eine Funktion der Signalverarbeitungsoperation zurückzusetzen; und
eine Ressourcensteuervorrichtung (13), die konfiguriert ist, die Ressource zu managen,
wobei das software-definierte Funkendgerät Signale innerhalb eines gewünschten Funkkommunikationssystems aus einer Vielzahl von Funkkommunikationssystemen überträgt, wenn das software-definierte Funkendgerät eine extern übertragene Nachricht empfängt, die anzeigt, dass das Funkendgerät Signale mit Bezug auf das gewünschte Funkkommunikationssystem übertragen kann.

12. Verfahren nach Anspruch 11, wobei die Ressourcensteuervorrichtung umfasst:
eine Ressourcenmanagementtabelle (21), die einen Überschuss der Ressource anzeigt;
einen Ressourcenmanager (22), der konfiguriert ist, den Überschuss der Ressource zuzuordnen; und
eine Ressourcenänderungseinrichtung (23), die konfiguriert ist, eine Funktion der Ressource zu ändern.

13. Verfahren nach Anspruch 11 oder 12, das software-definierte Funkendgerät ferner umfassend:
eine Antenne (16), die konfiguriert ist, Funksignale zu übertragen und zu empfangen; und
einen analogen Schalter (SW), der zwischen der Antenne und einem Leistungsverstärker (PA) der Funkeinheit aufgestellt ist,
wobei die Funkeinheitensteuervorrichtung EIN-/AUS-Operationen des analogen Schalters steuert.

14. Qualifikationssystem zum Testen eines Funkkommunikationssystems, inkludierend eine Vielzahl von Funkendgeräten (10), und ein repräsentatives Endgerät (10) mit der gleichen Hardwarekonfiguration wie die Vielzahl von Funkendgeräten, das System umfassend:
Mittel (33) zum Ausführen eines Qualifikationstests in dem repräsentativen Endgerät so um zu bestimmen, ob das repräsentative Endgerät in einem gewünschten Funkkommunikationssystem oder Systemen aus einer Vielzahl von Funkkommunikationssystemen verwendet werden kann oder nicht; und
Mittel zum Empfangen eines Testerfolgsergebnisses, das anzeigt, dass das repräsentative Endgerät den Qualifikationstest bestanden hat;
**gekennzeichnet dadurch, dass** die Vielzahl von Funkendgeräten und das repräsentative Endgerät software-definierte Endgeräte sind, und durch
das Empfangsmittel, das es zum Empfangen des Testerfolgsergebnisses als eine Testerfolgsnachricht gibt, das System ferner umfassend Mittel (100) zum Bekanntgeben der Testerfolgsnachricht zu der Vielzahl von Funkendgeräten so, um sie alle für eine Übertragung auf das gewünschte System oder Systeme zu qualifizieren.

15. System nach Anspruch 14, wobei
das Ausführungsmittel eine Steuersequenz zum Steuern einer Funkeinheit des repräsentativen Endgerätes bestimmt, wodurch das repräsentative Endgerät den Qualifikationstest bestehen kann,
das Empfangsmittel die Steuersequenz empfängt, und das Bekanntgabemittel die empfangene Steuersequenz der Vielzahl von Funkendgeräten bekannt gibt.

16. System nach Anspruch 14 oder 15, wobei das Bekanntgabemittel die Vielzahl von Funkendgeräten über eine Basisstation, die für das gewünschte Funkkommunikationssystem verwendet wird, bekannt gibt.

17. System nach Anspruch 14 oder 15, wobei das Bekanntgabemittel die Vielzahl von Funkendgeräten über ein Dienstzentrum, das für das gewünschte Funkkommunikationssystem verwendet wird, bekannt gibt.

18. System nach Anspruch 17, wobei das Dienstzentrum die Testerfolgsnachricht der Vielzahl von Funkendgeräten durch drahtlose Kommunikation bekannt gibt.

19. System nach Anspruch 17, wobei das Dienstzentrum die Testerfolgsnachricht der Vielzahl von Funkendgeräten durch drahtgebundene Kommunikation bekannt gibt.

20. System nach einem beliebigen von Ansprüchen 14 bis 19, wobei das Ausführungsmittel einen Qualifikationstest für alle Kombinationen der Vielzahl von Funkkommunikationssystemen durchführt.

21. System nach einem beliebigen von Ansprüchen 14 bis 20, in dem Softwaremodule entsprechend einer Vielzahl der Funkkommunikationssysteme in die software-definierten Funkendgeräte geladen werden, die dann zum Empfangen der Testerfolgsnachrichtenbekanntgabe zum Qualifizieren von ihnen fähig sind, in jenen Systemen zu übertragen.

22. System nach beliebigen von Ansprüchen 14 bis 18, in dem jedes Funkendgerät angeordnet ist, Signale im dem gewünschten Funkkommunikationssystem zu empfangen, sogar bevor es für eine Übertragung in dem System qualifiziert wurde.

23. System nach einem beliebigen von Ansprüchen 14 bis 22, wobei jedes aus der Vielzahl von software-definierten Funkendgeräten umfasst:
eine Funkeinheit (11), die konfiguriert ist, ein analoges Funksignal in ein digitales Signal zu konvertieren;
eine Funkeinheitensteuervorrichtung (15), die konfiguriert ist, die Funkeinheit zu steuern;
eine Ressource (12), die konfiguriert ist, das digitale Signal mit der Funkeinheit zu kommunizieren, um eine Signalverarbeitungsoperation in dem digitalen Signal durchzuführen, und eine Funktion der Signalverarbeitungsoperation zurückzusetzen; und
eine Ressourcensteuervorrichtung (13), die konfiguriert ist, die Ressource zu managen, wobei in Verwendung das software-definierte Funkendgerät Signale innerhalb eines gewünschten Funkkommunikationssystems aus einer Vielzahl von Funkkommunikationssystemen überträgt, wenn das software-definierte Funkendgerät eine extern übertragene Nachricht empfängt, die anzeigt, dass die Funkkommunikationsvorrichtung Signale mit Bezug auf das gewünschte Funkkommunikationssystem übertragen kann.

24. System nach Anspruch 23, wobei die Ressourcensteuervorrichtung umfasst:
eine Ressourcenmanagementtabelle (21), die einen Überschuss der Ressource anzeigt;
einen Ressourcenmanager (22), der konfiguriert ist, den Überschuss der Ressource zuzuordnen; und
eine Ressourcenänderungseinrichtung (23), die konfiguriert ist, eine Funktion der Ressource zu ändern.

25. System nach Anspruch 23 oder 24,
das software-definierte Funkendgerät ferner umfassend:
eine Antenne (16), die konfiguriert ist, Funksignale zu übertragen und zu empfangen; und
einen analogen Schalter (SW), der zwischen der Antenne und einem Leistungsverstärker (PA) der Funkeinheit aufgestellt ist,
wobei die Funkeinheitensteuervorrichtung EIN-/AUS-Operationen des analogen Schalters steuert.

## Revendications

1. Procédé de qualification destiné à essayer un système de communication radio comprenant une pluralité de terminaux radio (10), comprenant les étapes consistant à :
prévoir un terminal représentatif (10) ayant la même configuration matérielle que la pluralité de terminaux radio ;
exécuter un essai de qualification sur le terminal représentatif afin de déterminer si le terminal représentatif peut ou non être utilisé dans un système ou des systèmes de communication radio souhaités parmi une pluralité de systèmes de communication radio ; et
recevoir un résultat de réussite à l'essai indiquant que le terminal représentatif a réussi l'essai de qualification ;
**caractérisé en ce que** la pluralité de terminaux radio et le terminal représentatif sont des terminaux radio définis par logiciel, et par l'étape consistant à recevoir le résultat de réussite à l'essai sous la forme d'un message et à notifier le message de réussite à l'essai à la pluralité de terminaux radio afin de les qualifier pour une transmission sur le système ou les systèmes souhaités.

2. Procédé selon la revendication 1, dans lequel
l'étape consistant à exécuter détermine une séquence de commande destinée à commander un appareil de radio du terminal représentatif, grâce à laquelle le terminal représentatif peut réussir l'essai de qualification,
l'étape consistant à recevoir reçoit la séquence de commande, et l'étape consistant à notifier notifie la séquence de commande reçue à la pluralité de terminaux radio.

3. Procédé selon la revendication 1 ou 2, dans lequel l'étape consistant à notifier notifie la pluralité de terminaux radio par l'intermédiaire d'une station de base utilisée pour le système de communication radio souhaité.

4. Procédé selon la revendication 1 ou 2, dans lequel l'étape consistant à notifier notifie la pluralité de terminaux radio par l'intermédiaire d'un centre de services utilisé pour le système de communication radio souhaité.

5. Procédé selon la revendication 4, dans lequel le centre de services notifie le message de réussite à l'essai à la pluralité de terminaux radio par communication par fil.

6. Procédé selon la revendication 4, dans lequel le centre de services notifie le message de réussite à l'essai à la pluralité de terminaux radio par communication sans fil.

7. Procédé selon l'une quelconque des revendications précédentes, dans lequel l'étape consistant à exécuter effectue un essai de qualification pour l'ensemble des combinaisons de la pluralité de systèmes de communication radio.

8. Procédé selon l'une quelconque des revendications précédentes, dans lequel des modules logiciels qui correspondent à une pluralité des systèmes de communication radio sont chargés sur les terminaux radio définis par logiciel, qui sont ensuite capables de recevoir la notification du message de réussite à l'essai destinée à les qualifier pour effectuer une transmission sur ces systèmes.

9. Procédé selon l'une quelconque des revendications 1 à 5, dans lequel chaque terminal radio est agencé pour recevoir de signaux sur le système de communication radio souhaité même avant qu'il ait été qualifié pour effectuer une transmission sur le système.

10. Procédé selon la revendication 8, comprenant l'étape consistant à reconfigurer un des terminaux radio en utilisant des données de paramètre de commande pour changer un élément variable de fonction radio.

11. Procédé selon l'une quelconque des revendications précédentes, chacun parmi la pluralité des terminaux radio définis par logiciel comprenant :
un appareil de radio (11) configuré pour convertir un signal radio analogique en un signal numérique ;
un contrôleur (15) d'appareil de radio configuré pour commander l'appareil de radio ;
des ressources (12) configurées pour communiquer le signal numérique avec l'appareil de radio, pour effectuer une opération de traitement de signal sur le signal numérique, et pour réinitialiser une fonction de l'opération de traitement de signal ; et
un contrôleur (13) de ressources configuré pour gérer les ressources ;
dans lequel le terminal radio défini par logiciel transmet des signaux dans un système de communication radio souhaité à partir d'une pluralité de systèmes de communication radio, lorsque le terminal radio défini par logiciel reçoit un message transmis depuis l'extérieur indiquant que le terminal radio peut transmettre des signaux en ce qui concerne le système de communication radio souhaité.

12. Procédé selon la revendication 11, dans lequel le contrôleur de ressources comprend :
une table de gestion (21) de ressources indiquant un surplus de ressources ;
un gestionnaire (22) de ressources configuré pour allouer le surplus de ressources ; et
un dispositif de changement (23) de ressources configuré pour changer une fonction des ressources.

13. Procédé selon la revendication 11 ou 12, le terminal radio défini par logiciel comprenant en outre :
une antenne (16) configurée pour transmettre et recevoir des signaux radio ; et
un interrupteur analogique (SW) disposé entre l'antenne et un amplificateur de puissance (PA) de l'appareil de radio,
dans lequel le contrôleur de l'appareil de radio commande les opérations MARCHE/ARRET de l'interrupteur analogique.

14. Système de qualification destiné à essayer un système de communication radio comprenant une pluralité de terminaux radio (10), et un terminal représentatif (10) ayant la même configuration matérielle que la pluralité de terminaux radio, le système comprenant :
un moyen (33) destiné à exécuter un essai de qualification sur le terminal représentatif afin de déterminer si le terminal représentatif peut ou non être utilisé dans un système ou des systèmes de communication radio souhaités parmi une pluralité de systèmes de communication radio ; et
un moyen destiné à recevoir un résultat de réussite à l'essai indiquant que le terminal représentatif a réussi l'essai de qualification ;
**caractérisé en ce que** la pluralité de terminaux radio et le terminal représentatif sont des terminaux radio définis par logiciel, et par
le moyen de réception qui est destiné à recevoir le résultat de réussite à l'essai sous la forme d'un message de réussite à l'essai, le système comprenant en outre un moyen (100) destiné à notifier le message de réussite à l'essai à la pluralité de terminaux radio afin de tous les qualifier pour effectuer une transmission sur le système ou les systèmes souhaités.

15. Système selon la revendication 14, dans lequel
le moyen d'exécution détermine une séquence de commande destinée à commander un appareil de radio du terminal représentatif, grâce à laquelle le terminal représentatif peut réussir l'effet de qualification,
le moyen réception reçoit la séquence de commande, et le moyen de notification notifie la séquence de commande reçue à la pluralité de terminaux radio.

16. Système selon la revendication 14 ou 15, dans lequel le moyen de notification notifie la pluralité de terminaux radio par l'intermédiaire d'une station de base utilisée pour le système de communication radio souhaité.

17. Système selon la revendication 14 ou 15, dans lequel le moyen de notification notifie la pluralité de terminaux radio par l'intermédiaire d'un centre de services divisé pour le système de communication radio souhaité.

18. Système selon la revendication 17, dans lequel le centre de services notifie le message de réussite à l'essai à la pluralité de terminaux radio par communication sans fil.

19. Système selon la revendication 17, dans lequel le centre de services notifie le message de réussite à l'essai à la pluralité de terminaux radio par communication par fil.

20. Système selon l'une quelconque des revendications 14 à 19, dans lequel le moyen d'exécution effectue un essai de qualification pour l'ensemble des combinaisons parmi la pluralité des systèmes de communication radio.

21. Système selon l'une quelconque des revendications 14 à 20, dans lequel des modules logiciels qui correspondent à une pluralité des systèmes de communication radio sont chargés sur les terminaux radio définis par logiciel, qui sont ensuite capables de recevoir la notification du message de réussite à l'essai pour les qualifier afin d'effectuer une transmission sur ces systèmes.

22. Système selon l'une quelconque des revendications 14 à 18, dans lequel chaque terminal radio est agencé pour recevoir des signaux sur le système de communication radio souhaité même avant qu'il ait été qualifié pour effectuer une transmission sur le système.

23. Système selon l'une quelconque des revendications 14 à 22, dans lequel chacun parmi la pluralité de terminaux radio définis par logiciel comprend :
un appareil de radio (11) configuré pour convertir un signal radio analogique en un signal numérique ;
un contrôleur (15) d'appareil de radio configuré pour commander l'appareil de radio ;
des ressources (12) configurées pour communiquer le signal numérique avec l'appareil de radio, pour effectuer une opération de traitement de signal sur le signal numérique, et pour réinitialiser une fonction de l'opération de traitement de signal ; et
un contrôleur (13) de ressources configuré pour gérer les ressources, dans lequel, en cours d'utilisation, le terminal radio défini par logiciel transmet des signaux dans un système de communication radio souhaité à partir d'une pluralité de systèmes de communication radio, lorsque le terminal radio défini par logiciel reçoit un message transmis depuis l'extérieur indiquant que l'appareil de communication radio peut transmettre des signaux en ce qui concerne le système de communication radio souhaité.

24. Système selon la revendication 23, dans lequel le contrôleur de ressources comprend :
une table de gestion (21) de ressources indiquant un surplus de ressources ;
un gestionnaire (22) de ressources configuré pour allouer le surplus de ressources ; et
un dispositif de changement (23) de ressources configuré pour changer une fonction des ressources.

25. Système selon la revendication 23 ou 24,
le terminal radio défini par logiciel comprenant en outre :
une antenne (16) configurée pour transmettre et recevoir des signaux radio ; et
un interrupteur analogique (SW) disposé entre l'antenne et un amplificateur de puissance (PA) de l'appareil de radio,
dans lequel le contrôleur de l'appareil de radio commande les opérations MARCHE/ARRET de l'interrupteur analogique.
